# FASCICULE DE BREVET EUROPEEN

(11) **EP 0 578 542 B1**
(45) Date de publication et mention de la délivrance du brevet: **13.11.1996**
(21) Numéro de dépôt: 93401703.9
(22) Date de dépôt: 01.07.1993
(51) Int. Cl.: C03B 23/035, C03B 35/24

(54) **Procédé et dispositif pour supporter et transferer des feuilles de verre dans une cellule de formage**
Verfahren und Vorrichtung zum Stützen und Transport von Glasscheiben in einer Biegestation
Process and device for supporting and transferring glass sheets in a bending station

(30) Priorité: 09.07.1992 FR 9208482
(43) Date de publication de la demande: 12.01.1994
(73) Titulaire: SAINT-GOBAIN VITRAGE, F-92400 Courbevoie (FR)
(72) Inventeur: Lesage, Jean-Luc, F-60280 Margny les Compiegne (FR); Douche, Jean-Pierre, F-60150 Le Plessis-Brion (FR); Petitcollin, Jean-Marc, F-60150 Thourotte (FR); Tinelli, Pascal, F-60200 Compiègne (FR)
(74) Mandataire: Muller, René

(56) Documents cités:
- EP-A- 0 255 422
- US-A- 3 468 645
- US-A- 3 665 730
- US-A- 3 869 271
- US-A- 4 229 200
- US-A- 4 488 893
- US-A- 5 078 775

## Description

L'invention a trait aux techniques de bombage de feuilles de verre, et plus particulièrement aux dispositifs et procédés faisant partie de ces techniques, qui permettent de transférer et/ou supporter des feuilles de verre à l'intérieur de la cellule de formage.

Ces techniques sont notamment destinées à la fabrication de vitrages pour automobiles, qu'ils soient bombés puis trempés (équipant alors le plus souvent les côtés et l'arrière du véhicule) ou bombés puis recuits en vue d'un assemblage sous la forme de vitrages composites comportant par exemple de deux feuilles de verre (utilisés alors notamment en tant que pare-brise).

Or, tout particulièrement dans le domaine de l'automobile, les vitrages doivent répondre à des critères très sévères, notamment en termes de qualité optique et de conformité au galbe prescrit.

C'est pourquoi tous les efforts tendent à minimiser les risques de création de défaut, par exemple par frottement des feuilles de verre contre les outillages avec lesquels elles sont en contact, créant des marques à leur surface, et/ou par un positionnement incorrect des feuilles par rapport auxdits outillages, notamment par rapport aux formes de bombage, provoquant alors des galbes non conformes. Ceci est bien sûr d'autant plus crucial quand les feuilles se trouvent dans la cellule de formage, ayant atteint leur température de ramollissement, et subissent un bombage par aspiration et/ou pressage mécanique au contact direct avec des formes de bombage.

On rappelle que selon certaines techniques de bombage usuelles, en général, les feuilles de verre traversent horizontalement au four de réchauffage, convoyées sur un lit de rouleaux qui se poursuit jusque dans la cellule de formage, lit de rouleaux d'où elles sont alors soulevées, notamment par aspiration périphérique créée par un caisson de dépressurisation, au contact de la face inférieure galbée d'une forme de bombage supérieure, face dont elles épousent plus ou moins la courbure sous l'effet de l'aspiration. Ce formage peut ensuite être complété soit sous l'action conjuguée de l'inertie et de la gravité par largage des feuilles sur une forme inférieure annulaire, soit par pressage mécanique des feuilles entre forme supérieure et forme inférieure annulaire. Puis les feuilles sont évacuées, soit sur la même forme annulaire inférieure, soit sur une forme annulaire spécifique pour la trempe vers la cellule de trempe/traitement thermique. On se rapportera notamment axu brevets FR-B-2 085 464 ; EP-B-241 355 ; EP-A-240 418 ; EP-A-241 355 ; EP-A-255 432 et EP-A-389 315.

Se pose cependant le problème de choisir le moyen de transfert et/ou support des feuilles dans cette cellule, moyen qui soit le plus apte à conserver auxdites feuilles leur qualité optique à des températures élevées.

Les techniques de bombage précitées préconisent en effet comme moyen de transfert des feuilles du four à la cellule de formage puis comme moyen de support des feuilles dans la cellule avant prise en charge par les formes de bombage, une simple suite de rouleaux convoyeurs prolongeant le lit de rouleaux présent dans le four. Cela implique alors un contact mécanique direct entre rouleaux et feuilles ramollies dans la cellule, ce qui ne peut que limiter les possibilités de recentrage des feuilles par rapport aux formes de bombage (recentrage notamment effectué par les moyens exposés dans la demande de brevet EP-A-389 315 précitée), car tout repositionnement d'une certaine amplitude conduit à un glissement relatif feuilles/rouleaux accompagné de frottements générateurs de marque.

D'autres techniques de bombage ont proposé des moyens différents de transport et/ou support des feuilles dans la cellule de formage. Ainsi la demande de brevet EP-A-0 351 278 décrit un procédé de bombage consistant à transporter les feuilles du four à la cellule de formage à l'aide d'une bande transporteuse flexible immobilisant les feuilles sous la forme de bombage qui, par aspiration, les prend ensuite en charge. Cette bande peut en outre participer au bombage en jouant le rôle d'une contreforme inférieure de pressage. Les contacts ponctuels rouleaux/feuilles ont donc ici été remplacés par un contact continu entre feuilles et matière souple, mais il s'agit toujours d'un contact mécanique susceptible d'engendrer des marques sur les feuilles.

Par ailleurs, il est connu un procédé « tout coussin d'air », notamment décrit dans le brevet US-3 869 271, où des coussins d'air successifs dans le four se prolongent en un coussin d'air dans la cellule de formage pour assurer la totalité du convoyage des feuilles. Cependant la mise en oeuvre en paraît délicate car il n'est pas facile de garantir une bonne planéité de l'ensemble des coussins sur une longueur aussi importante, d'autant plus que l'unique mode de réalisation utilise des caissons pressurisés en céramique poreuse, de fabrication délicate et coûteuse et de reproductibilité incertaine.

En outre, utiliser un coussin d'air en partie amont du four, c'est-à-dire quand les feuilles de verre sont encore très rigides, tend à créer des défauts de planéité sur celles-ci, notamment des concavités transversales par rapport à leur axe de défilement, défauts qui peuvent provoquer des contacts physiques accidentels entre la face inférieure des feuilles de verre et le caisson générant le coussin d'air.

Il est connu par ailleurs du brevet US-3 665 730 un dispositif qui est apte à supporter, bomber et tremper simultanément des feuilles de verre et qui comporte des coussins d'air créés à l'aide de tubulures amenant des flux gazeux d'un générateur à une pluralité de conduits parallèles percés d'orifices et disposés transversalement à l'axe de défilement des feuilles de verre.

Il est également connu du brevet US-3 468 645 un coussin d'air qui est destiné à transporter les feuilles de verre au travers d'un four pour les amener à leur température de ramollissement, coussin généré par un caisson muni de fentes verticales d'alimentation en gaz et d'orifices latéraux d'évacuation en gaz.

On peut également citer le brevet US-5 078 775, qui décrit un coussin d'air pour feuilles de verre et qui est également généré par un caisson pressurisé où alternent des fentes d'alimentation en gaz, et des fentes d'évacuation en gaz permettant une sortie latérale des gaz.

L'invention a alors pour but la conception d'un moyen de transfert/support des feuilles de verre dans une cellule de formage apte à fonctionner à haute température, préservant la qualité optique des feuilles mêmes en cas d'opération de recentrage de celles-ci dans leur plan de convoyage, et qui soit de réalisation et de mise en oeuvre simples.

Selon l'invention, le dispositif peut supporter et/ou transférer dans une cellule de formage au moins la partie centrale de feuilles de verre chauffées à leur température de formage comporte un caisson pressurisé générant un coussin d'air et dont la face supérieure présente une alternance d'orifices d'alimentation et de fentes d'échappement en gaz. Ledit caisson comprend une pluralité de compartiments individuels transversaux par rapport à l'axe de défilement des feuilles de verre. Chacun des compartiments a d'une part une largeur (mesurée parallèlement audit axe) petite par rapport à la « hauteur » des feuilles de verre, inférieure à celle-ci, et d'autre part est muni de moyens d'alimentation en gaz présentant au moins deux niveaux de répartition de pression. (La « hauteur » des feuilles correspond dans le cadre de l'invention à sa dimension mesurée parallèlement à leur axe de défilement). En outre, les compartiments sont conçus de manière à ce que les parois qui les séparent les uns des autres sont définis par des « fourreaux » d'échappement des gaz qui prolongent à l'intérieur du caisson les fentes d'échappement pour évacuer les gaz hors du caisson.

Le choix d'un dispositif à coussin d'air présente en effet de nombreux avantages, notamment par rapport à un lit de rouleaux, puisqu'il offre une surface de contact pneumatique et non mécanique aux feuilles de verre ramollies. On évite ainsi les risques de marquage de leurs faces inférieures, même en cas d'opération de recentrage des feuilles sur ce coussin par rapport aux formes de bombage, et ceci juste avant qu'elles ne soient prises en charge par lesdites formes, ce qui supprime tout risque de voir les feuilles se désorienter à nouveau avant leur bombage.

Jusque là, le problème était par ailleurs d'arriver à obtenir une bonne uniformité de surface de support de ce coussin d'air, et ceci à des températures pouvant facilement excéder 600°C.

Or les deux caractéristiques spécifiques du coussin d'air selon l'invention, le compartimentage du caisson le générant et l'utilisation de plusieurs niveaux de répartition de pression, concourent à une parfaite homogénéité du coussin d'air, à la fois dans le temps et dans ses paramètres de pression en tout point.

En effet, il est nettement plus difficile de garantir une homogénéité dans le temps du support par coussin d'air lorsqu'il doit porter des feuilles de verre discontinues que lorsqu'il est destiné à porter par exemple un ruban de verre continu.

Dans le premier cas, qui est celui qui concerne l'invention, il faut que le coussin d'air puisse "réagir" correctement aux incessantes mises en régimes provoquées tout au long de la progression de chacune des feuilles de verre à sa surface.

Segmenter le caisson en compartiments revient à générer non plus un coussin d'air, mais une pluralité de coussins d'air adjacents et de surface de contact avec les feuilles de verre beaucoup plus réduite. Donc, au fur et à mesure de l'avancée au dessus du caisson de chacune des feuilles, chacun de ces "petits" coussins d'air se met progressivement en régime indépendamment de tous les autres, et se stabilise beaucoup plus rapidement que ne pourrait le faire un coussin d'air non segmenté, dit par la suite "coussin d'air global". Il est par ailleurs beaucoup plus facile, intrinsèquement, d'obtenir une bonne homogénéité dans le cas d'un coussin d'air de taille réduite que dans le cas d'un coussin d'air plus étendu, car il est plus aisé techniquement de garantir des caractéristiques de soufflage et d'évacuation de gaz uniformes sur une petite surface que sur une grande.

En outre, les niveaux de répartition de pression des moyens d'alimentation en gaz prévus selon l'invention permettent d'obtenir dans chacun des coussins d'air générés par les compartiments une bonne homogénéité de pression en tout point. Ceci est nécessaire dans la mesure où les feuilles de verre au-delà de leur température de ramollissement, c'est-à-dire vers 650°C, se conduisent comme un matériau visqueux, matériau qui se déformerait irrémédiablement si le régime de pression régnant dans le coussin d'air global était hétérogène localement.

Au moins un premier niveau de répartition de pression peut notamment être effectué directement dans le conduit d'alimentation en gaz de chacun des compartiments, conduit qui peut par ailleurs être centralisé et commun à l'ensemble des compartiments. Au moins un autre niveau de répartition peut être prévu également à l'intérieur de chacun desdits compartiments. Ces niveaux de répartition peuvent par exemple être très aisément obtenus par interposition à l'écoulement gazeux d'au moins une plaque percée d'orifices répartis, de préférence de manière régulière.

De préférence, la face supérieure du caisson qui recouvre l'ensemble des compartiments présente une alternance d'orifices d'alimentation notamment circulaires et de fentes d'échappement, notamment transversales à l'axe de défilement des feuilles de verre. En effet, il s'est avéré avantageux de prévoir également des fentes d'échappement, plutôt que de se contenter d'un échappement des gaz périphériques dont il a été vérifié expérimentalement qu'il tend à provoquer un phénomène de "cloche", c'est-à-dire de surpression au centre des coussins d'air due à des difficultés d'évacuation.

Pour des raisons notamment de simplicité de conception, il est souhaitable d'évacuer les gaz du coussin d'air sans recourir à un système d'aspiration au niveau de ses fentes dans le caisson. Dans ce cas, il est préférable d'adapter d'une part les dimensions des fentes, c'est-à-dire les prévoir suffisamment larges par exemple, d'autre part de prévoir une distance séparant le fond du caisson du sol qui soit suffisante, afin d'assurer une évacuation des gaz satisfaisante au niveau de la cellule de formage.

On peut cependant aussi faire appel à des dispositifs d'aspiration au niveau de ces fentes, rendant la structure du caisson plus complexe mais pouvant conduire à une maîtrise plus optimisée de l'évacuation de ces gaz.

Par ailleurs, pour ne pas créer de perturbations de pression à l'intérieur des compartiments du caisson, ces fentes se prolongent avantageusement à l'intérieur du caisson en fourreaux d'échappement évacuant les gaz hors du caisson. On prévoit alors de préférence des moyens d'aspiration de ces gaz au sortir desdits fourreaux dans la cellule de formage, afin d'effectuer un recyclage de ces derniers.

Le mode de réalisation le plus simple de l'invention consiste à utiliser ces fourreaux en tant que parois des compartiments du caisson, fourreaux pouvant alors également jouer le rôle de raidisseurs mécanique du caisson.

Le dispositif selon l'invention utilise de préférence une alimentation en gaz obtenue par un générateur du type ventilateur à air chaud ou trompe Venturi, c'est-à-dire des générateurs bien connus, car il permet d'obtenir un coussin d'air global apte à supporter de manière satisfaisante des feuilles de verre sans nécessiter des débits et/ou des pressions très importantes.

On utilise notamment, au moins pour constituer la face supérieure du caisson qui recouvre l'ensemble des compartiments, une plaque de tôle métallique usinée de manière appropriée puis stabilisée thermiquement, ce qui est un mode de réalisation simple et reproductible. On peut aussi envisager une plaque métallique ou une plaque en céramique qui soient moulées.

Dans le cas où l'on destine le coussin d'air à supporter la feuille de verre dans sa cellule de formage avant prise en charge par une forme annulaire inférieure, notamment pour une opération de pressage de la feuille contre une forme supérieure pleine galbée, il est avantageux de placer la forme annulaire à la périphérie du coussin afin qu'elle puisse saisir les bords de la feuille sans interférence perturbatrice avec le coussin d'air. Le mieux est alors de créer un coussin d'air dont le contour soit similaire à celui de la feuille de verre mais de proportions légèrement plus réduites, ce dernier ne supportant alors que la partie centrale de la feuille de verre, et non son extrême périphérie.

L'invention a également pour objet le procédé de mise en oeuvre de ce dispositif. Il s'agit notamment d'ajuster le réglage du coussin d'air, c'est-à-dire notamment les paramètres fonctionnels telle que l'alimentation en gaz et les paramètres structurels du dispositif, tels que le nombre et la conception des niveaux de répartition de pression, de manière à obtenir un coussin d'air conférant aux feuilles de verre une "hauteur de vol" appropriée. On définit cette hauteur de vol par la distance, mesurée perpendiculairement au plan du coussin d'air, qui sépare la face supérieure du caisson de pressurisation de la face inférieure de la feuille de verre. La sélection de cette hauteur de vol est importante, car elle conditionne un transfert sans heurts entre les moyens de convoyage hors de la cellule de formage et le caisson d'air dans la cellule. On choisit de préférence une hauteur de vol comprise entre 0,5 et 3 mm et notamment d'environ 2 mm, une gamme qui permet d'éviter des réglages trop précis et fastidieux entre le niveau des moyens de convoyage précédents tels que de rouleaux et celui du coussin d'air. En outre, en choisissant une hauteur de vol suffisamment importante, on réduit les risques de marquage accidentel des feuilles de verre au contact de la face supérieure du caisson pressurisé et/ou au contact de traces de calcin éventuellement présentes sur celle-ci.

Cette hauteur de vol est de préférence choisie pour les mêmes raisons en corrélation avec une "raideur" de coussin optimisée, raideur que l'on peut sélectionner notamment selon les mêmes paramètres fonctionnels et/ou structurels pré-cités. Ce caractère de raideur peut être défini par l'aptitude du coussin à réagir instantanément à une sollicitation en altitude sur un point d'une feuille de verre, par exemple pour éviter qu'une feuille prenant une légère inclinaison due à un niveau de coussin d'air légèrement inférieur à celui du lit de rouleaux précédent, ne vienne buter en partie avant contre la face supérieure du caisson. Trop "raide", un coussin d'air peut en revanche générer des phénomènes de vibration destabilisants. Dans la pratique, cette raideur est évaluée notamment par le calcul du rapport entre la pression régnant dans le caisson et la pression régnant dans le coussin d'air. Dans le cadre de l'invention, on choisit de préférence un tel rapport compris entre 3 et 7, ce qui conduit à une raideur satisfaisante. Cela implique qu'une grande partie de la perte de charge est réalisée dans les compartiments à l'intérieur du caisson, et non pas au niveau du coussin d'air seulement. Cette caractéristique est avantageuse, car elle contribue à diminuer le phénomène de perturbation séquentielle du coussin d'air due à l'arrivée discontinue des feuilles de verre à sa surface. En effet, si l'essentiel de la perte de charge s'effectuait au contraire au niveau du coussin d'air, chaque arrivée de feuilles créerait une perte de charge momentanée beaucoup plus considérable donc beaucoup plus perturbatrice.

Il est préférable, en outre, d'ajuster le réglage du coussin d'air et notamment l'alimentation en gaz, de manière à ce que la vitesse des gaz du coussin d'air contre la face inférieure des feuilles de verre n'excède pas 20 m/s, afin de ne pas créer de risque de marquage dû à l'impact des gaz arrivant au contact de ces dernières.

De manière à ne pas générer des différences de températures dans l'épaisseur du verre, les gaz d'alimentation du coussin d'air global sont de préférence à une température très proche de celle des feuilles de verre et/ou de l'atmosphère de la cellule de formage. La température du gaz d'alimentation peut cependant être un peu supérieure, ceci afin de créer une légère surchauffe des faces inférieures des feuilles de verre, faces destinées à être mises en extension lors du contact avec la forme supérieure pleine galbée de bombage. Cette surchauffe facilite ainsi le bombage, notamment dans le cas où il doit conférer aux feuilles un degré de courbure prononcé. Cette surchauffe s'effectuant sur un coussin d'air et sans contact ultérieur des feuilles ramollies avec un convoyeur mécanique type rouleaux avant leur bombage, il devient possible de l'amplifier sans encourir de risque accrû de marques et/ou ondulations comme c'est le cas lorsque les feuilles sont supportées par des rouleaux, ce qui est très avantageux.

L'invention porte également sur les procédés de bombage utilisant le dispositif de l'invention, procédés consistant à convoyer les feuilles de verre sur un lit de rouleaux dans un four de réchauffage destiné à les chauffer à leur température de bombage, puis à les faire glisser sur le coussin d'air généré par le caisson pressurisé de l'invention dans la cellule de bombage, à les immobiliser sur ledit coussin avant de les prendre en charge par les divers outils de bombage.

Notamment, dans le cadre de la technique de bombage exposée dans la demande de brevet français FR-A-2 678 261 le procédé de bombage consiste à chauffer chaque feuille de verre dans un four horizontal qu'elle traverse véhiculée sur un convoyeur à rouleaux moteurs qui la conduit dans une cellule de bombage où est maintenue une température ambiante sensiblement identique à celle de la feuille de verre, puis à immobiliser la feuille dans la cellule de bombage à l'aplomb d'une forme inférieure annulaire entourant le dispositif de l'invention comprenant le caisson pressurisé générant le coussin d'air soutenant la feuille de verre dans sa partie centrale, puis à soulever la forme inférieure annulaire afin que celle-ci vienne presser la feuille contre la forme supérieure de bombage. De préférence, à la fois la forme inférieure annulaire et le dispositif comprenant le caisson pressurisé sont montés sur une platine placée à l'extérieur de la cellule de bombage.

Les caractéristiques et avantages de l'invention ressortent de la description ci-après d'un mode de réalisation non limitatif, à l'aide des figures suivantes :
Fig. 1 : une cellule de formage vue de côté comprenant le caisson générant le coussin d'air selon l'invention.
Fig. 2 : une vue de dessous d'une feuille de verre supportée par le coussin d'air selon l'invention et centrée au-dessus de la forme inférieure annulaire de bombage.
Fig. 3 : une vue de dessus du caisson pressurisé générant le coussin d'air selon l'invention.
Fig. 4 : une coupe transversale dudit caisson pressurisé parallèlement à l'axe de défilement des feuilles de verre provenant du four.
Fig. 5 : une demi-coupe du même caisson pressurisé selon un plan parallèle à sa face supérieure.

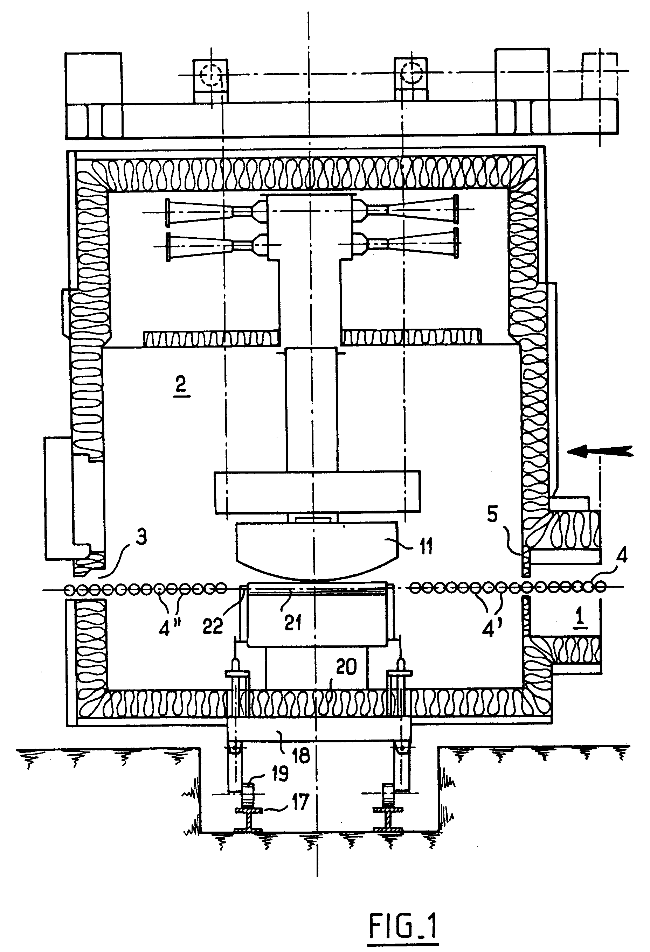

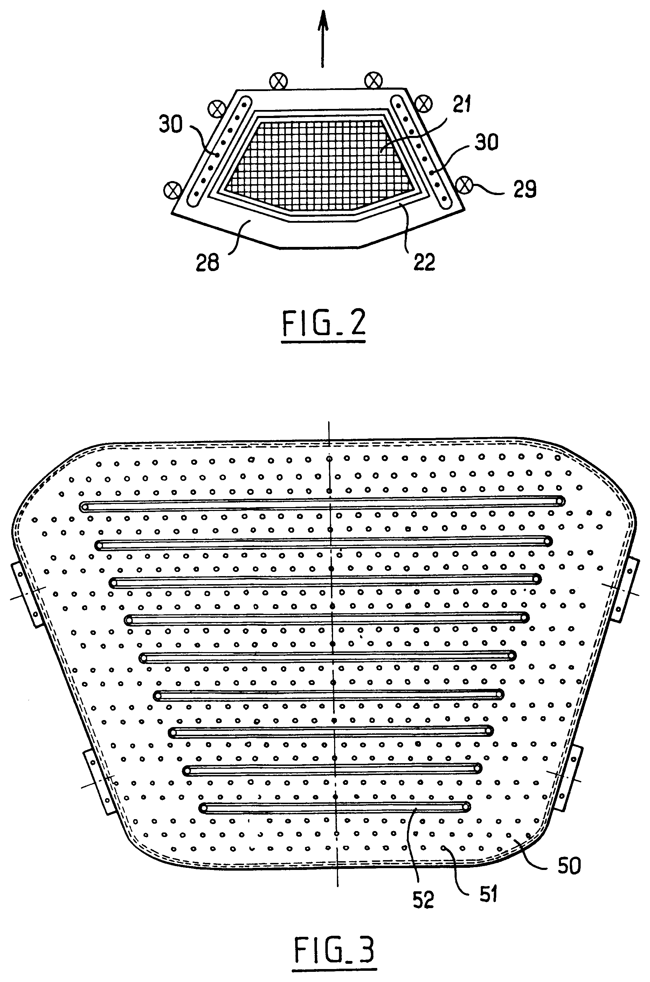

Il est tout particulièrement avantageux d'utiliser les dispositifs et procédés de support selon l'invention dans le contexte de la technique de bombage décrite aux figures 1 et 2 de la présente demande reprenant l'enseignement de la demande de brevet français FR-A 2 678 261, demande à laquelle on se rapportera pour plus de détails.

Il va de soi, cependant, que le dispositif et le procédé de l'invention peuvent avantageusement être utilisés dans toute cellule de formage et quelle que soit la technique de bombage envisagée. Ils peuvent ainsi remplacer avantageusement tous les moyens de convoyage/support de feuilles dans la cellule, notamment décrits dans les brevets ou demandes de brevets cités au début de la présente demande.

A la figure 1, est représentée une cellule de bombage 2, cellule munie d'une sortie 3 en direction de la cellule de refroidissement faisant suite à un four 1 dont n'est représentée que la partie terminale. Dans ce four, la feuille de verre est convoyée par un ensemble de rouleaux moteurs 4 par exemple en silice ou autre céramique réfractaire.

Ce convoyeur se prolonge jusqu'à la cellule de bombage (rouleau 4'), enceinte isolée thermiquement où est maintenue une température de l'ordre de la température de bombage des feuilles de verre, typiquement de l'ordre de 650°C lorsqu'une trempe thermique est prévue et de l'ordre de 550°C pour un recuit ultérieur. Un rideau 5 est éventuellement utilisé pour éviter des courants d'air parasites qui pourraient être générés par exemple lors des enfournements. Dans la zone de formage proprement dite, le convoyeur est interrompu, toutefois, de nouveaux rouleaux 4'' sont disposés dans le même alignement de l'autre côté de cette zone pour permettre d'évacuer, le cas échéant, un volume non traité.

Entre ces rouleaux 4' et 4'' est disposé le dispositif de support selon l'invention 21 des feuilles de verre, générant un coussin d'air prolongeant le plan de convoyage défini par ces rouleaux.

La partie inférieure de la cellule de formage, comporte une platine 18 portée par un chariot ou munie directement de rames 19. Cette platine 18 porte un élément isolant 20, le caisson pressurisé 21 du coussin d'air et la forme inférieure annulaire 22. Avec une telle disposition, en cas de changement de fabrication de vitrages, on peut aisément évacuer par la platine 18 hors de la cellule de bombage 2 conjointement la forme annulaire 22 et le caisson 21, de manière à les remplacer en une seule opération.

Ladite forme annulaire 22 est de préférence constituée par un rail continu, ce qui limite les risques de marquage de la surface du verre, mais peut également être formée de par exemple trois éléments articulés entre-eux, ceci pour résoudre les problèmes de bombages les plus complexes. Sur la forme inférieure annulaire 22 sont montés des doigts d'indexage (non représentés) qui viennent s'engager dans des fentes ou des oeillets (non représentés) associés à la forme supérieure 11.

La figure 2 permet de visualiser, en vue de dessous, la position relative de cette forme inférieure 22 et du coussin d'air généré par le caisson 21.

Ce coussin d'air, bien sûr un coussin d'air chaud, est conforme à l'invention et plus spécialement détaillé aux figures 3 à 5. Placé seulement au centre de la forme annulaire 22, le coussin d'air peut être aisément réglé de façon à tangenter le convoyeur à rouleaux lors de la prise en charge des feuilles de verre 28. Le coussin d'air ne sert en règle générale qu'à soutenir la feuille de verre 28 dont le mouvement est commandé par le contact de sa partie arrière avec les rouleaux. En pratique, cette commande est parfaitement efficace tant que le verre est en contact avec au moins un rouleau, le coussin d'air n'engendrant pratiquement pas de ralentissement du verre. Néanmoins, il peut être nécessaire de prévoir des moyens pour aider à l'avancement de la feuille de verre tels qu'un soufflage d'air chaud sur la tranche, une orientation de biais de certain des orifices de la plaque supérieure 50 (figure 3) ou encore une légère pente du coussin d'air.

Il doit être souligné que dans le cas de l'invention, le seul coussin d'air utilisé l'est dans la zone de formage, ce qui évite nombre d'inconvénients bien connus de l'emploi des coussins d'air. En premier lieu, il est parfaitement possible d'opérer dans le four une chauffe différenciée de la face inférieure de la feuille de verre 28, car alors celle-ci est soutenue par des rouleaux. D'autre part, la trajectoire de la feuille de verre 28 symbolisée par la flèche représentée en figure 2 est maîtrisée de manière bien plus satisfaisante avec des rouleaux.

Grâce à ce coussin d'air dans la zone de formage et aux butées de focalisation, on peut rattraper aisément tous les écarts de trajectoire de l'ordre de quelques millimètres dûs aux rouleaux du four. Ces butées latérales 29 de focalisation sont montées solidaires de la forme supérieure de bombage 11 (figure 1) ou en référence par rapport à celle-ci. En effet, si comme schématisée à la figure 2, la feuille de verre 28 s'avance "pointe en avant", il suffit que son éventuel décalage latéral ne lui interdise pas de s'engager entre les butées de focalisation pour qu'un centrage parfait soit finalement obtenu (en pratique ceci autorise, le plus souvent, un décalage de plusieurs centimètres, ce qui est très largement suffisant). Le verre, encore en contact avec au moins un rouleau 4 qui assure l'entraînement de la feuille, va glisser latéralement sur le coussin d'air sans risquer le moindre dommage.

Avec un tel dispositif, le positionnement de la feuille de verre 28 est donc complètement indépendant du coussin d'air qui constitue purement un moyen de support du verre. Par contre, feuille de verre 28 et forme supérieure de bombage 11 sont parfaitement en coïncidence, même si la forme supérieure de bombage se décale par rapport à sa position de référence.

A la figure 2, afin de compenser, le cas échéant, l'affaissement de la partie périphérique de la feuille d'air non soutenue par le coussin d'air, la forme inférieure annulaire 22 peut être munie de rampes de soufflage 30 d'air chaud.

L'opération de bombage consiste à amener la feuille de verre sur le coussin d'air généré par le caisson 21, puis à abaisser la forme supérieure de bombage 11, forme focalisant sur le coussin d'air ladite feuille.

Les butées de focalisation 29 sont éventuellement escamotées si nécessaire pendant le déclenchement de l'aspiration périphérique qui vient soulever la feuille de verre. La feuille de verre est ainsi préformée au contact de la forme supérieure de bombage. La forme inférieure annulaire 22 est alors remontée en position de pressage. Le pressage terminé, la feuille de verre est retenue par aspiration contre la forme supérieure de bombage 11 qui est alors remontée en position haute. Un cadre de transfert - ou tout autre moyen analogue - vient alors chercher la feuille de verre bombée pour la conduire au poste de refroidissement.

Les figures 3 à 5 vont maintenant détailler la structure du caisson 21 spécifique de l'invention.

La figure 3 est une vue de dessus du caisson 21, dont les contours, comme le montre la figure 2 précédente adoptent ceux des feuilles de verre mais sont de proportions légèrement plus réduites, afin de laisser leur périphérie libre de prise en charge ultérieure par la forme inférieure annulaire 22. La face supérieure 50 du caisson 21 de la figure 3 est constituée par une tôle métallique usinée puis stabilisée thermiquement, d'une épaisseur d'environ 10 mm, tôle munie d'une alternance de trous d'alimentation en gaz 51 répartis uniformément et d'un diamètre d'environ 6 mm et de fentes d'échappement 52 disposées perpendiculairement à l'axe de défilement des feuilles de verre et d'une largeur d'environ 12 mm.

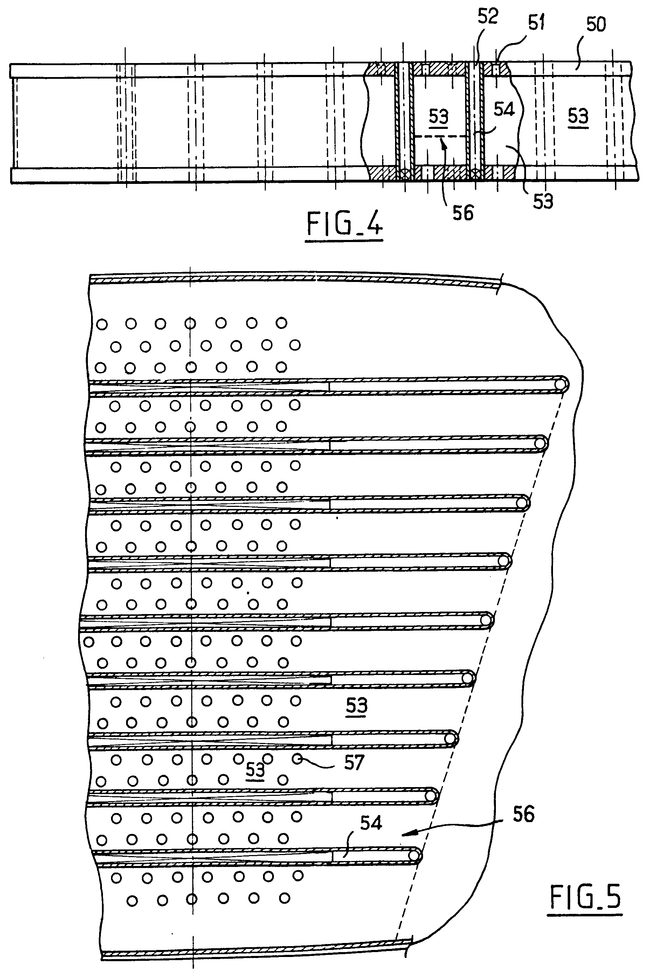

La figure 4 représente une coupe transversale schématique du caisson 21 parallèlement à l'axe de défilement des feuilles de verre. On peut constater que la plaque supérieure 50 recouvre une pluralité de compartiments 53 dont les parois sont constituées par les fourreaux d'échappement 54 conduisant les gaz d'évacuation pénétrant par les fentes d'échappement 52 hors du caisson 21. Ces fourreaux individualisent ainsi des compartiments générant chacun une portion du coussin d'air, ce qui permet une mise en régime beaucoup plus rapide du coussin d'air global pendant la progression puis l'immobilisation de chacune des feuilles de verre sur celui-ci. La largeur de chaque compartiment, qui correspond ici à la distance séparant deux fourreaux 54, peut de préférence être comprise entre 75 et 150 mm, de bons résultats ayant été obtenus avec une distance voisine de 100 mm.

Comme le montre la figure3, le caisson 21 a été ainsi segmenté en 10 compartiments pour soutenir la partie centrale d'une feuille de verre dans ce cas précis ayant une forme approximativement trapézoïdale et une hauteur pré-définie d'environ 1 mètre. La largeur de chacun de ces compartiments, bien plus petite que la hauteur globale de la feuille, procure un soutien extrêmement homogène à celle-ci.

L'alimentation en gaz de chacun des compartiments 53 est assurée par un conduit d'alimentation commun (non représenté) se situant sous le caisson 21 sensiblement au niveau de son centre géométrique.

Deux moyens de répartition de pression sont ici prévus pour assurer une bonne répartition homogène de pression dans le coussin d'air au-dessus de la plaque 50 : l'un dans le conduit d'alimentation commun, l'autre référencé 56 environ présent à mi-hauteur dans chacun des compartiments 53 et représenté plus précisément à la figure 5 : il s'agit de plaques de tôle métallique usinées de manière à présenter une répartition d'orifices 57 homogénéisant l'écoulement gazeux soit dans ce conduit d'alimentation commun, soit à l'intérieur de chacun des compartiments 53. Dans ce dernier cas, on préfèrera, comme indiqué en figure 5, munir chacun des compartiments d'une plaque perforée 56 présentant une répartition homogène d'orifices 57 dans sa partie centrale. De cette manière, la pression dans chaque compartiment 53 est parfaitement uniforme, ce qui donne au coussin d'air global une pression très uniforme préservant la planéité des feuilles qui sont à leur température de ramollissement et donc susceptibles de déformations.

Il est à noter, par ailleurs, qu'à la périphérie de la plaque 50 du caisson 21, les gaz du coussin d'air peuvent s'évacuer non seulement par les fentes 52 des fourreaux 54 mais également librement à la surface de celle-ci. C'est pourquoi il est préférable, comme représenté en figure 3, pour permettre une évacuation plus homogène des gaz, de restreindre légèrement la longueur desdites fentes 52 au niveau de cette plaque 50, afin qu'elles ne se prolongent pas jusqu'à ses bords extrêmes.

En outre, on peut prévoir avantageusement une densification (non représentée) des trous d'alimentations en gaz 51 à la périphérie de la plaque 50, de manière à ce que, à même vitesse d'impact et à même niveau de pression, le soufflage des gaz d'alimentation soit plus dense sur la périphérie de la face inférieure de la feuille de verre, ce qui permet de compenser l'évacuation accrue des gaz à la périphérie tangentiellement à la plaque 50 et même d'augmenter légèrement la hauteur de vol de la périphérie de la feuille. On écarte ainsi tout risque d'affaissement des bords de la feuille, dont la périphérie extrême n'est pas soutenue par le coussin d'air avant d'être prise en charge par la forme annulaire inférieure 22.

L'alimentation et l'évacuation des gaz du coussin d'air fonctionnent en boucle fermée, avec un ventilateur à air chaud brassant environ 8000 m³/h, ventilateur qui envoie le gaz dans le conduit d'alimentation commun puis récupère le gaz évacué au sortir des fourreaux d'échappement 54 dans la cellule de formage à l'aide de bouches d'aspiration à une certaine distance desdits fourreaux. Aspirer ainsi du gaz en partie basse de la cellule de formage contribue par ailleurs avantageusement à l'homogénéisation de la température de l'atmosphère de ladite cellule, puisque ce gaz, réchauffé puis réinjecté dans le coussin, réchauffe l'atmosphère de la cellule par convection.

On choisit ici d'assurer par exemple une hauteur de vol d'environ 2 mm.

On choisit en outre une vitesse d'impact d'environ 10 m/s et une raideur de coussin définie d'une part par la pression régnant dans les compartiments 53 du caisson, ici d'environ 300 à 700 Pa (alors que dans le conduit commun d'alimentation en amont de la plaque métallique perforée qui l'équipe afin de créer un niveau de répartition de pression, la pression est d'environ 1500 Pa), et d'autre part par la pression régnant dans le coussin d'air, ici d'environ 100 Pa. L'essentiel de la perte de charge est donc réalisé à l'intérieur des compartiments. Ces valeurs de hauteur de vol, vitesse et pressions constituent un bon compromis pour l'obtention d'un coussin d'air permettant le support de feuilles de verre sans risque de contact mécanique entre les faces inférieures des feuilles et la tôle 50 du caisson, ni risque de trace d'impact des jets gazeux provenant des orifices d'alimentation. En outre, sa raideur ajustée permet de compenser sans problème toute légère différence de niveaux entre le plan de convoyage défini par les rouleaux 4 et celui défini par le coussin.

En conclusion, les caractéristiques aussi bien structurelles que fonctionnelles du coussin d'air généré par le dispositif de supportage selon l'invention lui confèrent les propriétés d'homogénéité à haute température à la fois dans le temps et dans l'espace, homogénéité garantissant un glissement puis une immobilisation sur celui-ci des feuilles de verre accompagnés éventuellement d'opération(s) de recentrage sans nuire cependant à leur qualité optique.

En outre, il est à noter que ledit dispositif de support par coussin d'air est d'une grande simplicité de conception, ce qui rend tout à fait envisageable et acceptable industriellement le changement de dispositif à chaque changement de fabrication d'un vitrage donné, sans entraîner de surcoûts notables et/ou de complexité de mise en route particulière.

## Revendications

1. Dispositif pour supporter/transférer dans une cellule de formage (2) au moins la partie centrale de feuilles de verre, chauffées à leur température de formage, comportant un caisson pressurisé (21) générant un coussin d'air dont la face supérieure (50) présente une alternance d'orifices d'alimentation en gaz (51) et de fentes d'échappement en gaz (52), **caractérisé en ce que** ledit caisson comporte une pluralité de compartiments individuels (53) transversaux par rapport à l'axe de défilement des feuilles de verre (28), les parois séparant lesdits compartiments étant définies par des fourreaux d'échappement des gaz (54) prolongeant à l'intérieur du caisson les fentes d'échappement (52) pour évacuer les gaz hors du caisson, chacun desdits compartiments (53) ayant d'une part une largeur mesurée parallèlement audit axe inférieure à la « hauteur » des feuilles de verre et d'autre part étant muni d'amenées de gaz jusqu'aux orifices d'alimentation (51) et présentant au moins deux niveaux de répartition de pression.

2. Dispositif selon la revendication 1, **caractérisé en ce qu'**au moins un premier niveau de répartition de pression est réalisé dans le conduit d'alimentation en gaz de chacun des compartiments.

3. Dispositif suivant l'une des revendications précédentes, **caractérisé en ce qu'**au moins un niveau de répartition de pression est réalisé individuellement à l'intérieur de chacun des compartiments (53).

4. Dispositif suivant la revendication 2 ou 3, **caractérisé en ce que** les niveaux de répartition de pression sont obtenus par interposition à l'écoulement gazeux d'au moins une plaque (56) percée d'orifices répartis (57).

5. Dispositif selon l'une des revendications précédentes, **caractérisé en ce qu'**il comporte un conduit d'alimentation en gaz commun à tous les compartiments (53).

6. Dispositif selon l'une des revendications précédentes, **caractérisé en ce que** l'alimentation en gaz est obtenue par un générateur du type des ventilateurs à air chaud ou trompes Venturi.

7. Dispositif selon l'une des revendications précédentes, **caractérisé en ce que** des moyens d'aspiration recyclent les gaz d'échappement dans la cellule de bombage (2) à leur sortie des fourreaux d'échappement (54).

8. Dispositif selon l'une des revendications précédentes, **caractérisé en ce qu'**au moins la face supérieure (50) du caisson est fabriquée à partir d'une plaque de tôle métallique recouvrant l'ensemble des compartiments, de préférence usinée puis stabilisée thermiquement ou moulée.

9. Procédé de mise en oeuvre du dispositif selon l'une des revendications précédentes, **caractérisé en ce qu'**on ajuste le réglage du coussin d'air de manière à permettre une « hauteur de vol » des feuilles de verre comprise entre 0,5 et 3 mm, et de préférence d'environ 2 mm, et de manière à ce que la vitesse du gaz du coussin d'air soit inférieure à 20 m/s et soit de préférence d'environ 10 m/s.

10. Procédé de mise en oeuvre du dispositif selon l'une des revendications 1 à 8, **caractérisé en ce qu**'on règle le rapport de la pression régnant dans le caisson sur la pression régnant dans le coussin d'air à une valeur comprise entre 3 et 7.

11. Procédé de mise en oeuvre du dispositif selon l'une des revendications 1 à 8, **caractérisé en ce qu'**on chauffe les gaz d'alimentation à une température proche de celle des feuilles de verre et éventuellement à une température supérieure.

12. Application du dispositif selon l'une des revendications 1 à 8 dans une technique de bombage ou la feuille de verre (28) est convoyée sur un lit de rouleaux (4) dans le four de réchauffage (1) destiné à les chauffer à leur température de ramollissement puis glisse sur le coussin d'air généré par le caisson (21) dans la cellule de formage (2), s'y immobilise et est ensuite prise en charge par les outils de bombage (11, 22).

13. Application selon la revendication 12, **caractérisée en ce que** la feuille de verre (28) est chauffée à température de bombage dans un four horizontal (1) qu'elle traverse véhiculée par un convoyeur à rouleaux moteurs (4) qui la conduit dans une cellule de bombage (2) où est maintenue une température ambiante sensiblement identique à la température de bombage de ladite feuille (28), puis s'immobilise dans la cellule de bombage (2) à l'aplomb inférieure annulaire (22) entourant le dispositif comprenant le caisson pressurisé (2) générant le coussin d'air soutenant la partie centrale de la feuille (28), ladite forme inférieure annulaire (22) étant soulevée pour venir presser la feuille de verre (28) contre la forme supérieure (11) de bombage, la forme inférieure annulaire (22) et le dispositif comprenant le caisson pressurisé (21) étant de préférence montés sur une platine (18) placée à l'extérieur de la cellule de bombage (2).

## Claims

1. Device for supporting/transferring, in a shaping station (2), at least the central part of glass sheets, heated to their shaping temperature, the device comprising a pressurized box (21) generating an air cushion, the upper face (50) of which has an alternation of gas supply orifices (51) and of gas discharge slots (52), characterized in that said box comprises a plurality of individual compartments (53), transverse to the axis of travel of the glass sheets (28), the walls separating said compartments being defined by gas discharge sleeves (54) continuing, inside the box, the discharge slots (52) for discharging the gases out of the box, each of said compartments (53) having, on the one hand, a width measured parallel to said axis smaller than the "height" of the glass sheets and, on the other hand, being provided with means for supplying the gas as far as the supply orifices (51) and having at least two levels of pressure distribution.

2. Device according to Claim 1, characterized in that at least one first pressure distribution level is created in the supply duct for gas to each of the compartments.

3. Device according to one of the preceding Claims, characterized in that at least one pressure distribution level is realized individually inside each of the compartments (53).

4. Device according to Claim 2 or 3, characterized in that the pressure distribution levels are produced by the interposition of at least one plate (56) perforated by distributed orifices (57) in the gas flow.

5. Device according to one of the preceding Claims, characterized in that it comprises a common supply duct for gas to all the compartments (53).

6. Device according to one of the preceding Claims, characterized in that the gas supply is produced by a generator of the hot air blower type or venturi tube type.

7. Device according to one of the preceding Claims, characterized in that suction means recycle the discharge gases into the bending station (2) at their exit from the discharge sleeves (54).

8. Device according to one of the preceding Claims, characterized in that at least the upper face (50) of the box is made from a plate of metal covering the entirety of the compartments, the plate being preferably machined and then thermally stabilized or moulded.

9. Process for using the device according to one of the preceding Claims, characterized in that the setting of the air cushion is so adjusted as to permit a "lift height" of the glass sheets of between 0.5 and 3 mm, and preferably of approximately 2 mm, and in such a way that the speed of the air cushion is less than 20 m/s and preferably is approximately 10 m/s .

10. Process for using the device according to one of Claims 1 to 8, characterized in that the ratio of the pressure obtaining in the box to the pressure obtaining in the air cushion is adjusted to a value of from 3 to 7.

11. Process for using the device according to one of Claims 1 to 8, characterized in that the feed gases are heated to a temperature close to that of the glass sheets and possibly to a higher temperature.

12. Application of the device according to one of Claims 1 to 9 in a bending technique in which the glass sheet (28) is conveyed on a bed of rollers (4) through the reheating furnace (1) intended for heating them to their softening temperature, and then slides over the air cushion generated by the box (21) in the shaping station (2), stops there and is then taken over by the bending tools (11, 22).

13. Application according to Claim 12, characterized in that the glass sheet (28) is heated to bending temperature in a horizontal furnace (1), through which it passes carried on a conveyor having driven rollers (4) which conducts it into a bending station (2), where an ambient temperature substantially identical to the bending temperature for said glass sheet (28) is maintained, and then stops in the bending station (2) vertically above an annular lower mould (22), surrounding the device comprising the pressurized box (2) generating the air cushion supporting the central part of the glass sheet (28), said annular lower mould (22) being raised to press the glass sheet (28) against the upper bending mould (11), the annular lower mould (22) and the device comprising the pressurized box (21) being preferably mounted on a plate (18) situated outside the bending station (2).

## Patentansprüche

1. Vorrichtung zum Tragen/Transportieren wenigstens des zentralen Bereichs von auf ihre Formgebungstemperatur erhitzten Glasscheiben in eine Formgebungszelle (2), welche einen ein Luftkissen erzeugenden Druckkasten (21) umfaßt, dessen Oberseite (50) abwechselnd Gasversorgungsöffnungen (51) und Gasaustrittsschlitze (52) aufweist, **dadurch gekennzeichnet, daß** der Kasten eine Vielzahl einzelner Abteile (53) enthält, die quer zur Durchlaufachse der Glasscheiben (28) stehen, wobei die diese Anteile trennenden Wände von Gasaustrittsfächern (54) gebildet werden, die im Kasteninneren die Austrittsschlitze (52) verlängern, um das Gas aus dem Kasten zu evakuieren, und jedes der Anteile (53) einerseits eine zu dieser Achse parallel gemessene Breite besitzt, die kleiner als die "Höhe" der Glasscheiben ist, und andererseits mit Gaszuführungen bis zu den Versorgungsöffnungen (51) ausgestattet ist und wenigstens zwei Druckverteilungsniveaus aufweist.

2. Vorrichtung nach Anspruch 1, **dadurch gekennzeichnet, daß** wenigstens ein erstes Druckverteilungsniveau in der Gasversorgungsleitung jedes Anteils verwirklicht wird.

3. Vorrichtung nach einem der vorhergehenden Ansprüche, **dadurch gekennzeichnet, daß** wenigstens ein Druckverteilungsniveau individuell im Inneren jedes Anteils (53) verwirklicht wird.

4. Vorrichtung nach Anspruch 2 oder 3, **dadurch gekennzeichnet, daß** die Druckverteilungsniveaus erhalten werden, indem in den Gasstrom wenigstens eine Platte (56) eingebaut wird, die von verteilten Öffnungen (57) durchbohrt ist.

5. Vorrichtung nach einem der vorhergehenden Ansprüche, **dadurch gekennzeichnet, daß** sie eine Gasversorungsleitung enthält, die sämtlichen Abteilen (53) gemeinsam ist.

6. Vorrichtung nach einem der vorhergehenden Ansprüche, **dadurch gekennzeichnet, daß** die Gasversorgung durch einen Erzeuger vom Typ von Heißluftlüftern oder Venturidüsen erhalten wird.

7. Vorrichtung nach einem der vorhergehenden Ansprüche, **dadurch gekennzeichnet, daß** das ausgeströmte Gas durch Ansaugmittel am Ausgang der Austrittsfächer (54) in die Biegezelle (2) zurückgeführt wird.

8. Vorrichtung nach einem der vorhergehenden Ansprüche, **dadurch gekennzeichnet, daß** wenigstens die Oberseite (50) des Kastens aus einer sämtliche Abteile bedeckenden Platte hergestellt ist, die vorzugsweise ein spannungsfrei geglühtes maschinell bearbeitetes Metallbiech oder gegossen ist.

9. Verfahren zur Anwendung der Vorrichtung nach einem der vorhergehenden Ansprüche, **dadurch gekennzeichnet, daß** die Regelung des Luftkissens so eingestellt wird, daß es eine "Schwebehöhe" der Glasscheiben von 0,5 bis 3 mm und vorzugsweise von etwa 2 mm ermöglicht und die Gasgeschwindigkeit des Luftkissens weniger als 20 m/s und vorzugsweise etwa 10 m/s beträgt.

10. Verfahren zur Anwendung der Vorrichtung nach einem der Ansprüche 1 bis 8, **dadurch gekennzeichnet, daß** das Verhältnis des im Kasten herrschenden Drucks zu dem im Luftkissen herrschenden Druck auf einen Wert von 3 bis 7 eingeregelt wird.

11. Verfahren zur Anwendung der Vorrichtung nach einem der Ansprüche 1 bis 8, **dadurch gekennzeichnet, daß** das Versorgungsgas auf eine Temperatur, die nahe der der Glasscheiben ist, und gegebenenfalls auf eine darüber liegende Temperatur erhitzt wird.

12. Anwendung der Vorrichtung nach einem der Ansprüche 1 bis 8 in einem Biegeverfahren, in weichem die Glasscheibe (28) in den Erwärmungsofen (1), der vorgesehen ist, sie auf ihre Erweichungstemperatur zu erhitzen, auf einem Rollen-bett (4) befördert wird und danach auf dem von dem Ka-sten (21) erzeugten Luftkissen in die Formgebungszelle (2) gleitet, wo sie anhält und anschließend von den Biegewerk-zeugen (11, 22) aufgenommen wird.

13. Anwendung nach Anspruch 12, **dadurch gekennzeichnet daß** die Glasscheibe (28) in einem Horizontalofen (1) auf Biegetemperatur erhitzt wird, den sie, transportiert von einem Förderer (4) mit angetriebenen Rollen, durchläuft, der sie in eine Biegezelle (2) bringt, worin eine Umgebungstemperatur aufrechterhalten wird, die etwa gleich der Biegetemperatur dieser Glasscheibe (28) ist, und sie anschließend in der Biegezelle (2) senkrecht zur unteren Ringform (22) anhält, welche die Vorrichtung umgibt, die den Druckkasten (2) enthält, der das Luftkissen erzeugt, welches den zentralen Bereich der Glasscheibe (28) abstützt, wobei die untere Ringform (22) angehoben wird, um die Glasschei-be (28) an die obere Biegeform (11) zu pressen und die untere Ringform (22) und die den Druckkasten (21) enthal-tende Vorrichtung vorzugsweise auf einer Platte (18) angebracht sind, die außerhalb der Biegezelle (2) angeordnet ist.
